# EUROPEAN PATENT APPLICATION

(11) **EP 3 593 925 A1**
(43) Date of publication of application: **15.01.2020**
(21) Application number: 19181244.5
(22) Date of filing: 19.06.2019
(51) Int. Cl.: B22F 3/105, B33Y 50/02, G05B 19/4099, G05B 19/418, G06F 17/50, B22F 3/10, B22F 3/11, B22F 5/00, E06C 7/08, F16B 5/00, F16C 7/00, F16C 9/00, B64C 1/00, F16B 5/01

(54) **METHODS OF DESIGN AND MANUFACTURE OF A COMPONENT**

(30) Priority: 11.07.2018 GB 201811337
(71) Applicant: Rolls-Royce plc, London SW1E 6AT (GB)
(72) Inventor: Cousins, Daniel, Derby, Derbyshire DE24 8BJ (GB)
(74) Representative: Rolls-Royce plc

(57) **Abstract**

A method of designing (300) an optimised component (100) for a load-bearing application comprises the steps of: analysing (302) a solid component (200) having an external shape to determine a stress distribution in the solid component (200) in response to an applied load; and defining (304), based upon the determined stress distribution in the solid component (200), a structure for an optimised component (100) comprising an outer skin layer (108) and an internal filament structure (110). The outer skin layer (108) forms an external shape substantially identical to the external shape of the solid component (200) and the internal filament structure (110) is enclosed by the outer skin layer (108), such that the optimised component (100) is configured to bear the applied load.

## Description

The disclosure relates to methods of designing and manufacturing an optimised component for a load-bearing application such as a bracket for an aerospace application.

Load-bearing components, such as brackets, are common in aerospace applications for the permanent or temporary securing of components to one another in a defined spatial relationship. Such load-bearing components may be manufactured by casting or by additive manufacture of metals, such as steel, or other materials to form a solid component.

A fine surface finish may improve the life of a component made by additive manufacture, however achieving a suitably fine surface finish may be particularly difficult, expensive and/or time consuming.

It may therefore be desirable to provide improved methods of design and manufacture of load-bearing components, particularly for aerospace applications.

According to a first aspect, there is provided a method of designing an optimised component for a load-bearing application, the method comprising: analysing a solid component having an external shape to determine a stress distribution in the solid component in response to an applied load; and defining, based upon the determined stress distribution in the solid component, a structure for an optimised component comprising an outer skin layer and an internal filament structure, the outer skin layer forming an external shape substantially identical to the external shape of the solid component and the internal filament structure enclosed by the outer skin layer, such that the optimised component is configured to bear the applied load.

According to a second aspect, there is provided a method of manufacturing an optimised component. The method may comprise designing an optimised component according to the method of the first aspect, and manufacturing the optimised component according to the defined structure. The manufacturing step may be performed using additive manufacturing.

The optimised component may be configured to bear the load through the internal filament structure. The internal filament structure may prevent the propagation of any cracks which form in the outer skin layer through the internal filament structure. The internal filament structure may arrest any cracks which form in the outer skin layer.

The internal filament structure may comprise a plurality of filaments. An internal crack within a single filament may propagate through the single filament before arresting. A crack within a single filament may not propagate through another filament. Any residual load after cracking (or failure) of a filament may be taken by the surrounding filament structure.

The applied load may be a load which the solid component will or would experience in use.

These properties may improve the mechanical properties of the component, such as the fatigue strength. The reduced amount of material used to form the optimised component may also result in a good weight to volume ratio, which may be particularly advantageous

The optimised component may comprise a first region and a second region. The internal filament structure may have a first filament density and a second filament density. The first filament density may be the filament density in an internal filament structure of the first region of the optimised component and the second filament density may be the filament density in an internal filament structure of second region of the optimised component. The first filament density may be different to the second filament density.

The method may further comprise: determining the stress distribution in a first region of the solid component corresponding to the first region of the optimised component; and defining the first filament density. The first filament density may be dependent upon the stress distribution in the first region of the solid component.

The method may further comprise: determining the stress distribution in a second region of the solid component corresponding to the second region of the optimised component; determining whether the stress distribution is greater in the first region or the second region of the optimised component and defining the second filament density, wherein the second filament density is dependent upon the stress distribution in the second region of the solid component. If it is determined that the stress distribution is greater in the first region of the solid component, the first filament density may be greater than the second filament density; and if it is determined that the stress distribution is greater in the second region of the solid component, the second filament density may be greater than the first filament density. The component may comprise a high-load areas, comprising a high-load feature such as a bolt hole, and low-load areas. If the first region of the solid component (and the corresponding first region of the optimised component) comprises a high-load area, and the second region of the solid component (and the corresponding second region of the optimised component) comprises a low-load area, the first filament density may be higher than the second filament density. If the first region of the solid component (and the corresponding first region of the optimised component) comprises a low-load area, and the second region of the solid component (and the corresponding second region of the optimised component) comprises a high-load area, the second filament density may be higher than the first filament density.

The optimised component may comprise a first region and a second region. The outer skin layer may have a first layer thickness and a second layer thickness. The first layer thickness may be the layer thickness in an outer skin layer of the first region of the optimised component and the second layer thickness may be the layer thickness in an outer skin layer of the second region of the optimised component. The first layer thickness may be different to the second layer thickness.

The method may further comprise: determining the stress distribution in a first region of the solid component corresponding to the first region of the optimised component; and defining the first layer thickness. The first layer thickness may be dependent upon the stress distribution in the first region of the solid component.

The method may further comprise: determining the stress distribution in a second region of the solid component corresponding to the second region of the optimised component; determining whether the stress distribution is greater in the first region or the second region of the optimised component and defining the second layer thickness, wherein the second layer thickness is dependent upon the stress distribution in the second region of the solid component. If it is determined that the stress distribution is greater in the first region of the solid component, the first layer thickness may be greater than the second layer thickness; and if it is determined that the stress distribution is greater in the second region of the solid component, the second layer thickness may be greater than the first layer thickness. The component may comprise high-load areas, comprising a high-load feature such as a bolt hole, and low-load areas. If the first region of the solid component (and the corresponding first region of the optimised component) comprises a high-load area, and the second region of the solid component (and the corresponding second region of the optimised component) comprises a low-load area, the first layer thickness may be higher than the second layer thickness. If the first region of the solid component (and the corresponding first region of the optimised component) comprises a low-load area, and the second region of the solid component (and the corresponding second region of the optimised component) comprises a high-load area, the second layer thickness may be higher than the first layer thickness.

The outer skin layer may be a metallic layer. The outer skin layer may comprise titanium, a titanium alloy, a steel, a nickel-based alloy, or an aluminium alloy.

The internal filament structure may comprise filaments comprising metals (such as titanium), alloys (such as titanium alloys, steels, nickel-based alloys and aluminium alloys), high performance polymers (such as PEEK), or plastics. The internal filament structure may comprise a matrix comprising metals (such as titanium), alloys (such as titanium alloys, steels, nickel-based alloys and aluminium alloys), high performance polymers (such as PEEK) or plastics. These materials may provide damping and/or crack propagation advantages.

Defining the structure for the optimised component may comprise defining a lattice cell based on a standardised filament, and calculating a layout and a distribution of the lattice cell within the optimised component based on the determined stress distribution.

The optimised component may be improved over the solid component in at least one material or structural property. In particular, the optimised component may provide one or more of improved weight, toughness, resistance to crack propagation, resistance to fatigue, and/or damage tolerance relative to the equivalent solid component. It should be understood that "optimised" in the context of this disclosure may not necessarily mean that the optimised component has the optimum (i.e. best possible) property or properties for the given external shape, but that it has one or more improved properties relative the equivalent solid component. In some cases, it is possible that the optimised component may have improved performance in one or more properties while also having reduced performance in one or more other properties relative to the solid component. For example, the optimised component may have reduced weight and reduced crack propagation, but reduced stiffness or strength relative to the equivalent solid component.

The outer skin layer may comprise at least one hole for drainage. The or each hole can optionally be plugged. The or each hole may allow for drainage of excess powder during the manufacturing process. The or each hole may be plugged or left open, for example depending on stress requirements. The or each hole may be left open in order to normalise internal pressure in the component.

The optimised component may be an aerospace component. The optimised component may be a bracket, such as an L-shaped bracket.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 schematically shows an exemplary optimised L-shaped bracket;
Figure 2 schematically shows a cross section through the optimised L-shaped bracket of Figure 1;
Figure 3 schematically shows a cross section through an exemplary arrangement of an outer skin layer in a high-load region of the optimised L-shaped bracket;
Figure 4 schematically shows a cross section through an exemplary arrangement of an internal filament structure in a high-load region of the optimised L-shaped bracket and a low-load region of the optimised L-shaped bracket;
Figure 5 schematically shows an exemplary solid L-shaped bracket;
Figure 6 schematically shows a cross section through the exemplary solid L-shaped bracket of Figure 5;
Figure 7 schematically shows an exemplary method for designing an optimised component;
Figure 8 schematically shows an exemplary method for manufacturing an optimised component; and
Figure 9 schematically shows an exemplary lattice cell pattern for an internal filament structure of an optimised component.

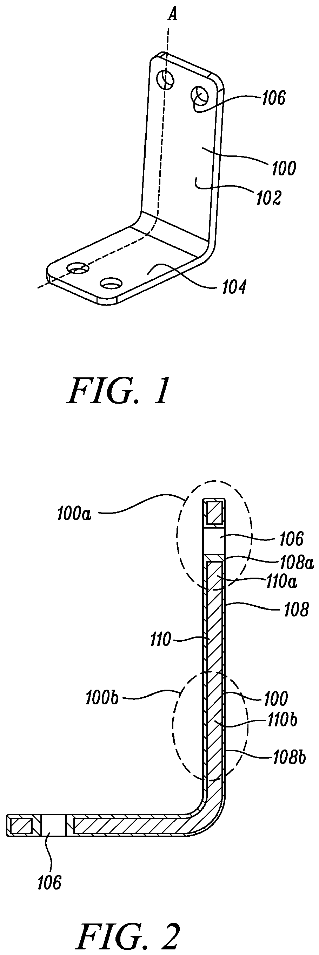

With reference to **Figure 1****,** an L-shaped bracket 100 is shown. The bracket 100 comprises an upper portion 102 and a lower portion 104 which are connected at an angle of 90° to form an L-shape. The bracket 100 can be used for mounting units, pipework and harnesses to the main engine structure, particularly to casings and flanges that are sensitive to weight and stiffness. A desired stiffness of the bracket may be defined so that the engine structure to which it will be attached is not affected by excessive stiffness. It will be understood that an L-shaped bracket has been shown for simplicity and that the method described herein may be used to design and manufacture brackets which are more complex in form and loading.

The upper portion 102 and the lower portion 104 each comprise two holes 106, which can be used to affix the bracket 100 to a main engine structure (not shown), for example with bolts or other releasable fixings.

Referring now to **Figure 2****,** a cross-section of the bracket 100 along line A in Figure 1 is shown. The bracket 100 comprises an outer skin layer 108 and an internal filament structure 110.

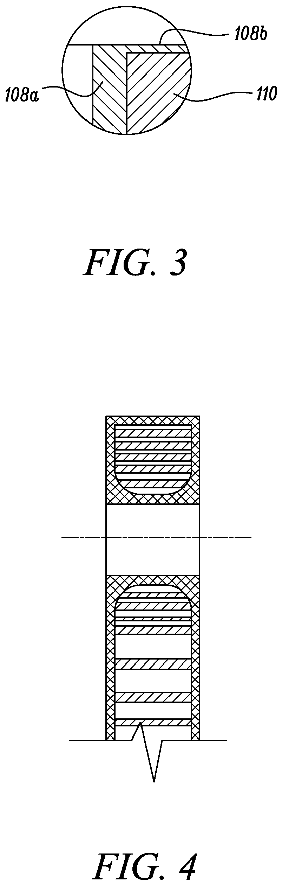

As shown in Figure 2 and **Figure 3****.** The outer skin layer 108 comprises a metallic layer which encases the internal filament structure 110 and defines and forms the external shape of the bracket 100. The metallic layer may comprise titanium, a titanium alloy, a steel, a nickel-based alloy, or an aluminium alloy. As will be discussed below, the outer skin layer 108 can be formed by additive manufacture. The outer skin layer 108 has a thickness which can vary throughout the outer skin layer 108. For example, the bracket 100 comprises a high-load region 100a proximate to a hole 106, which in use will experience high stresses and strains due to the external forces acting on the bracket 100. A high-load outer skin layer 108a is formed in the high-load region 100a. The bracket 100 comprises a low-load 100b region away from a hole 106 which in use will experience lower stresses and strains than those in the high-load region 100a due to the external forces acting on the bracket 100. A low-load outer skin layer 108a is formed in the low-load region 100b. The high-load outer skin layer 108a has a greater thickness than the low-load outer skin layer 108b.

As shown in Figure 2 and **Figure 4****,** the internal filament structure 110 comprises a plurality of filaments in a matrix. The internal filament structure may comprise filaments comprising metals (such as titanium), alloys (such as titanium alloys, steels, nickel-based alloys and aluminium alloys), high performance polymers (such as PEEK) or plastics. The internal filament structure may comprise a matrix comprising metals (such as titanium), alloys (such as titanium alloys, steels, nickel-based alloys and aluminium alloys), high performance polymers (such as PEEK) or plastics. The filaments are of a uniform standardised diameter and are formed by additive manufacture. As will be discussed below, the internal filament structure 110 can be formed by additive manufacture. The internal filament structure 110 has a filament density which can vary throughout the internal filament structure 110. A high-load internal filament structure 110a is formed in the high-load region 110a. A low-load internal filament structure 110b is formed in the low-load region 110b. The high-load internal filament structure 110a has a greater filament density than the low-load internal filament structure 110b. In other words, the high-load filament structure 110a has more filaments per unit volume than the low-load filament structure 110b.

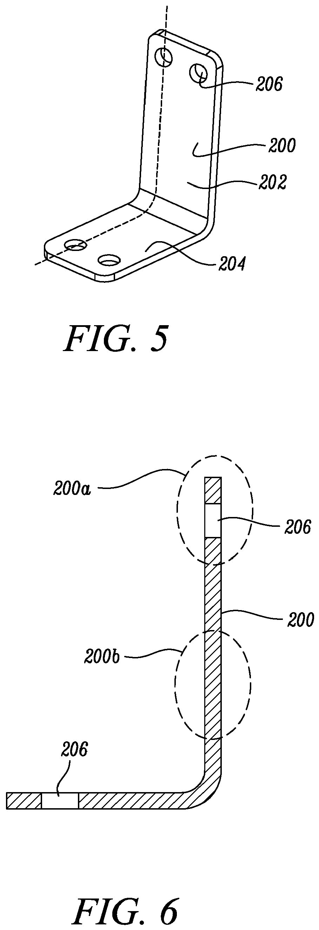

Referring now to **Figures 5 and 6****,** a solid bracket 200 is shown. The solid bracket 200 is formed out of a metal or alloy, such as comprise titanium, a titanium alloy, a steel, a nickel-based alloy, or an aluminium alloy. The solid bracket 200 has the same external shape as the optimised bracket 100. The solid bracket 200 comprises an upper portion 202 and a lower portion 204 which are connected at an angle of 90° to form an L-shape. The upper portion 202 and the lower portion 204 each comprise two holes 106, which can be used to affix the bracket 200 to an engine structure, for example with bolts. It will be understood that the method disclosed herein may be used to design and manufacture a bracket of any suitable shape with any suitable number of holes 106. The solid bracket 200 comprises a high-load region 200a which corresponds to the high-load region 100a of the optimised bracket 100. The solid bracket 200 comprises a low-load region 200b which corresponds to the low-load region 100b of the optimised bracket 100.

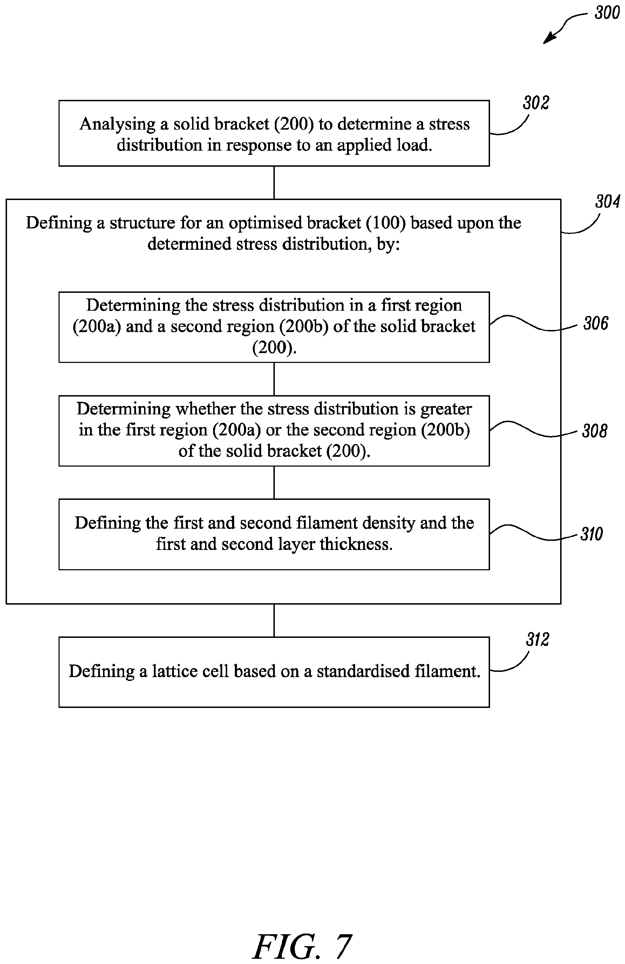

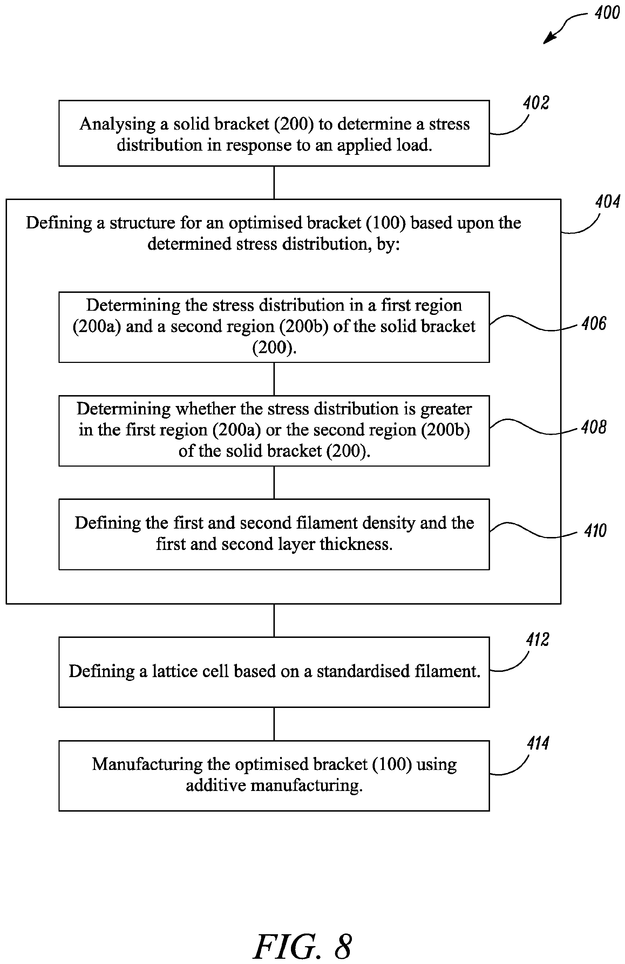

An exemplary method 300 of designing and manufacturing the optimised bracket 100 will now be discussed, with reference to **Figures 7** **and** **8****.**

In use, the bracket 200 will experience stresses and strains depending upon the external forces which the bracket 200 is subject to. These forces, and internal stresses, can be analysed (or determined) using mathematical modelling, computational simulation, experimental testing or a combination of these methods, to determine a stress distribution throughout the bracket 200. As shown in Figure 7, a method 300 of designing the optimised bracket 100 comprises analysing 302 the solid bracket 200 to determine a stress distribution in response to an applied load which corresponds to the loads the bracket 200 will experience in use. Other methods of analysing (or determining) the forces and corresponding internal stresses may also be envisaged by the skilled person.

The method 300 further comprises a step 304 of defining a structure for the optimised bracket 100 based upon the determined stress distribution in the solid bracket 200.

In step 304, defining 304 a structure for the optimised bracket 100 comprises the step 306 of determining the stress distribution in the high-load (or first) region 200a and the low-load (or second) region 200b of the solid bracket 200, a step 308 of determining whether the stress values (or distribution) are greater in the first region 200a or the second region 200b, and a step 310 of defining the filament densities and the layer thicknesses in the first (or high-load) and second (or low-load) regions 100a,100b of the optimised component 100. Although in this embodiment, the high-load region has been discussed as being the first region, and the low-load region as the second region, it will be appreciated that the high-load region could be the second region and the low-load region could be the first region.

A computer-aided design (CAD) tool can be used in a step 312 to define a lattice cell to be used in the internal filament structure 110, based on the filament dimensions. The filament dimensions may be calculated by a mixture of finite element modelling, hand calculation and specimen testing. The minimum diameter of the filament will be just above the minimum producible feature size for additive manufacture (around 0.4mm currently, but may be smaller in future). The maximum diameter of the filaments may be between around 0.4mm and around 1mm.

The CAD tool can be used to define the internal filament structure 110 and the outer skin layer 108 for the optimised bracket 100 based upon the determined stress distribution of the solid bracket 200. The internal filament structure 110 and the outer skin layer 108 can be defined such that the optimised bracket 100 can bear the loads and stresses which the optimised bracket 100 will experience in use.

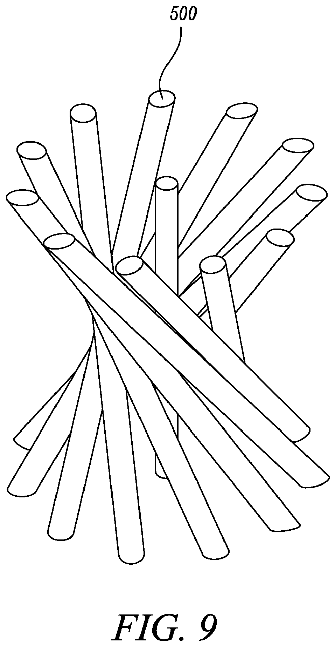

After defining a diameter (or beam thickness or cross section) of a standard filament 500, the standard filament 500 may be arranged in a lattice cell pattern based on a cylindrical envelope. The lattice pattern comprises a mixture of angled and normal to surface filaments 500, as shown in **Figure 9****.** The lattice cell is printed, and strength and stiffness tested, in order to determine the density of the cell which is to be used within a given stress field. The scalability of the structural stiffness of the lattice cell can be investigated by testing the stiffness after a change in length or angle of the lattice cell (which is governed by the diameter of the cylindrical envelope).

The lattice cell and its mechanical properties are scripted into a modelling tool which can automatically calculate the optimum layout and distribution of the lattice cell throughout the optimised bracket 100, based on the determined stress distribution in the solid bracket 200.

If the bracket is simple, the distribution of the lattice cell throughout the optimised bracket 100 can be hand calculated, and the modeller could select a lattice cell feature from a modelling tool, input a required cell stiffness and use the modelling tool to fill the required area of the optimised component 100. This could save modelling time and reduce the level of CAD modelling experience required by the user.

In high-load (high-stress) regions of the solid bracket 200, the defined internal filament structure 110 of the corresponding region of the optimised bracket 100 will be the high-load internal filament structure 110a, and the defined outer skin layer 108 will be the high-load outer skin layer 108a. In low-load (low-stress) regions of the solid bracket 200, the defined internal filament structure 110 of the corresponding region of the optimised bracket 100 will be the low-load internal filament structure 110b, and the defined outer skin layer 108 will be the low-load outer skin layer 108b. Depending on the determined stress distribution, the internal filament structure 110 will vary in filament density throughout the bracket 100. It will be appreciated that the filament density can vary across a broad range of values between the high-load and low-load filament density values. Depending on the determined stress distribution, the outer skin layer 108 will vary in layer thickness throughout the bracket 100. It will be appreciated that the layer thickness can vary across a broad range of values between the high-load and low-load layer thickness values.

In defining the outer skin layer 108, holes (not shown) may be added through the surface of the outer skin layer 108 in order to provide drainage for powder during additive manufacture of the optimised bracket 100. If necessary to improve the properties of the optimised bracket 100, the holes may be plugged before use of the optimised bracket 100, or may be left open to normalise the internal and external pressure on the component.

As shown in Figure 8, a method 400 of manufacture of the optimised component 100 is shown. The method 400 comprises steps 402 and 404, which correspond to steps 302 and 304 of the method 300 of designing an optimised component 100 described above. The method 400 further comprises the step 414 of manufacturing the optimised component 100 based upon the internal filament structure 110 and the outer skin layer 108 defined by the CAD tool. In this embodiment, the optimised bracket 100 is manufactured by additive manufacture, but other methods of manufacturing can be envisaged.

The methods 300,400 may provide an optimised bracket 100 in which the damage tolerance of the component is improved over the solid bracket 200. Cracks which initiate in the outer skin layer may not propagate into the internal filament structure. Cracks which initiate in a filament may propagate through that filament but no further into the matrix. If a filament does crack, the load on the optimised bracket 100 may be distributed amongst the other filaments, such that the optimised bracket 100 does not fail. This may improve the performance of the optimised bracket 100 and its service life, and may reduce scrappage due to manufacturing faults. The optimised bracket 100 may provide a more durable bracket which is less likely to fail in fatigue than the solid bracket 200. The optimised bracket 100 may also be lighter in weight than the solid bracket 200.

While the methods 300, 400 herein are discussed in relation to the illustrated L-shaped bracket, it will be appreciated that the method could be applied to any form of load-bearing component as appreciated by the skilled person.

## Claims

1. A method of designing (300) an optimised component (100) for a load-bearing application, the method (300) comprising:
analysing (302) a solid component (200) having an external shape to determine a stress distribution in the solid component (200) in response to an applied load; and
defining (304), based upon the determined stress distribution in the solid component (200), a structure for an optimised component (100) comprising an outer skin layer (108) and an internal filament structure (110), the outer skin layer (108) forming an external shape substantially identical to the external shape of the solid component (200) and the internal filament structure (110) enclosed by the outer skin layer (108), such that the optimised component (100) is configured to bear the applied load.

2. A method of designing (300) an optimised component (100) according to claim 1, wherein the optimised component (100) comprises a first region (100a) and a second region (100b),
wherein the internal filament structure (110) has a first filament density and a second filament density, wherein the first filament density is the filament density in an internal filament structure (110a) of the first region (100a) of the optimised component (100) and the second filament density is the filament density in an internal filament structure (110b) of the second region (100b) of the optimised component (100); and
wherein the first filament density is different to the second filament density.

3. A method of designing (300) an optimised component (100) according to claim 2, wherein defining the structure (304) for the optimised component (100) comprises:
determining (306) the stress distribution in a first region (200a) of the solid component (200) corresponding to the first region (100a) of the optimised component (100); and
defining (310) the first filament density, wherein the first filament density is dependent upon the stress distribution in the first region (200a) of the solid component (200).

4. A method of designing (300) an optimised component (100) according to claim 3, further comprising:
determining (306) the stress distribution in a second region (200b) of the solid component (200) corresponding to the second region (100b) of the optimised component (100);
determining (308) whether the stress distribution is greater in the first region (200a) or the second region (200b) of the solid component (200);
defining (310) the second filament density, wherein the second filament density is dependent upon the stress distribution in the second region (200b) of the solid component (200);
wherein:
if it is determined that the stress distribution is greater in the first region (200a) of the solid component (200), the first filament density is greater than the second filament density; and
if it is determined that the stress distribution is greater in the second region (200b) of the solid component (200), the second filament density is greater than the first filament density.

5. A method of designing (300) an optimised component (100) according to any preceding claim, wherein the optimised component (100) comprises a first region (100a) and a second region (100b),
wherein the outer skin layer (108) has a first layer thickness and a second layer thickness, wherein the first layer thickness is the thickness in an outer skin layer (108a) of the first region (100a) of the optimised component (100) and the second layer thickness is the layer thickness in an outer skin layer (108b) of the second region (100b) of the optimised component (100); and
wherein the first layer thickness is different to the second layer thickness.

6. A method of designing (300) an optimised component (100) according to claim 5, wherein defining (304) the structure for the optimised component (100) comprises:
determining (306) the stress distribution in a first region (200a) of the solid component (200) corresponding to the first region (100a) of the optimised component (100); and
defining (310) the first layer thickness, wherein the first layer thickness is dependent upon the stress distribution in the first region (200a) of the solid component (200b).

7. A method of designing (300) an optimised component (100) according to claim 6, further comprising:
determining (306) the stress distribution in a second region (200b) of the solid component (200) corresponding to the second region (100b) of the optimised component (100);
determining (308) whether the stress distribution is greater in the first region (200a) or the second region (200b) of the solid component (200);
defining (310) the second layer thickness, wherein the second layer thickness is dependent upon the stress distribution in the second region (200b) of the solid component (200);
wherein:
if it is determined that the stress distribution is greater in the first region (200a) of the solid component (200), the first layer thickness is greater than the second layer thickness; and
if it is determined that the stress distribution is greater in the second region (200b) of the solid component (200), the second layer thickness is greater than the first layer thickness.

8. A method of designing (300) an optimised component (100) according to any preceding claim wherein the outer skin layer (108) is a metallic layer.

9. A method of designing (300) an optimised component (100) according to any preceding claim wherein the internal filament structure (110) comprises filaments comprising metal, alloys, high performance polymers, or plastics.

10. A method of designing (300) an optimised component (100) according to any preceding claim, wherein defining the structure (304) for the optimised component comprises defining (312) a lattice cell based on a standardised filament.

11. A method of designing (300) an optimised component (100) according to any preceding claim, wherein the optimised component (100) is optimised over the solid component (200) by at least one property.

12. A method of designing (300) an optimised component (100) according to claim 11 wherein the optimised property is selected from the group consisting of damage tolerance, resistance to crack propagation, resistance to fatigue, weight and toughness.

13. A method of designing (300) an optimised component (100) according to any preceding claim, wherein the outer skin layer (108) comprises holes for drainage.

14. A method of designing (300) an optimised component (100) according to any preceding claim, wherein the optimised component (100) is an aerospace component.

15. A method of manufacturing (400) an optimised component (100) comprising:
designing (300) an optimised component (100) according to the method of any preceding claim; and
manufacturing (414) the optimised component (100) according to the defined structure using additive manufacturing.
